# EUROPEAN PATENT SPECIFICATION

(11) **EP 1 460 892 B1**
(45) Date of publication and mention of the grant of the patent: **15.07.2015**
(21) Application number: 02789022.7
(22) Date of filing: 18.12.2002
(51) Int. Cl.: A01J 5/017

(54) **METHOD AND APPARATUS FOR DETECTION OF TEATS**
VERFAHREN UND VORRICHTUNG ZUR DETEKTION VON ZITZEN
PROCÉDÉ ET DISPOSITIF DE DÉTECTION DE PIS

(30) Priority: 28.12.2001 NL 1019678
(43) Date of publication of application: 29.09.2004
(73) Proprietor: Idento Electronics B.V., 8307 AA Ens (NL)
(72) Inventor: DE VRIES, Franciscus, Johannes, Petrus, 8475 EK Nijeholtpade (NL); HOFMAN, Hendrik, 8531 PC Lemmer (NL)
(74) Representative: Verdijck, Gerardus
(86) International application number: PCT/NL2002/000845
(87) International publication number: WO 2003/055297

(56) References cited:
- WO-A-00/11935
- WO-A-00/62602
- WO-A-01/19172
- WO-A-01/52633

## Description

The present invention relates to a method and device for determining the position of at least one teat of an udder of an animal for milking. Such methods and devices are generally known, but often have shortcomings.

From the international patent application published as WO 01/52.633, the disclosure of which is reflected in the pre-characterising portion of claims 1 and 14, a method and an apparatus are for instance known, wherein illumination is employed, an image is obtained, and teats are identified in the image, where after a milking cup or teat cup is directed towards the teat to be milked on the basis of identification thereof in the image for subsequent milking using a homing-in process performed with distance measurements and calculations.

The present invention is distinguished over the known method and apparatus by the steps and features in the characterising portions of claims 1 and 14 respectively.

The present invention has for its object to provide a method and a device which can be utilized in practice and with which the position of the teats can be determined sufficiently quickly to enable immediate connection there after of teat cups thereto. For this purpose a 3-D representation of the udder is obtained, for which the method comprises the steps according to the independent method claims and the device according to the invention has the features according to the independent device claims.

It is noted, that in WO 01/52.366 a calculation resembling triangulation is employed. However, this calculation is exclusively employed for the process homing in on one of the teats to be milked, after the image of the udder with the teats is obtained, from which an initial indication of the teat to be milked is derived. In contrast, according to the present invention, triangulation is employed for generating a 3-D representation from a number of images and calculations, after which the teat cup or milking cup is directed towards the teat to be milked.

In a preferred embodiment a method according to the present invention has the further feature that the light source is driven pulsatingly. This prevents daylight or sunlight having a disrupting influence on the detection of illuminated points of the udder or the udder itself. It is herein possible to switch on the light source when the recording means are activated. A synchronization thus takes place. It is then possible to use a considerably higher light intensity when light is projected onto the udder. The illuminated points hereby become more readily detectable, since the illuminated points are distinguished better from non-illuminated points. It is not a solution here to simply increase the intensity of a non-pulsating light source. This could cause eye hazard to for instance a user. Despite a higher peak capacity, a pulsating light source can be driven such that the light pulses are hardly visible to the human eye, or not at all, so that this cannot cause any hazard.

In yet another preferred embodiment, at least two detections are made with the light source in and out of operation, and the difference between the detections with the light source in and out of operation is calculated. In the detection with the light source in operation, detection elements are present which are not only the result of the projected light per se, but result from ambient light. By removing these detection elements, wherein the difference is calculated between the two detections, the resolution, or contrast, of the detection of the projected light can be increased.

In a preferred embodiment a teat cup is connected to the teat by a robot arm at the determined or established location of the teat. A robot arm can be actuated sufficiently rapidly to connect the teat cup immediately after determining of the position of the teat.

The light source and the recording means can further be disposed stationary relative to each other. The number of calculations in the triangulation is hereby limited, since varying positions of the light source and the recording means relative to each other do not have here to be taken into account. The recording means and the light source can for instance be arranged together on the robot arm used to arrange teat cups on the teats. The invention is however not limited hereto. Additionally or alternatively, the light source and the recording means can also be disposed separately and displaceably relative to each other. All that is important for triangulation purposes is that the mutual positioning is known at a certain moment, when a detection is recorded. In the case of a separate and displaceable setup of light source and recording means, one of the light source and the recording means can advantageously be arranged on the robot arm. This is then preferably the light source, so that a movement of the robot arm during obtaining of the detections can correspond with at least one part of the pattern to be followed.

The pattern can be followed in different ways. One possibility is that the light source is displaced in a direction corresponding with the pattern, although the light source can also be held stationary per se, wherein the orientation of the light source is varied in accordance with the pattern. It is also possible to displace the light source and to vary the orientation thereof, wherein the pattern to be followed is zigzag-shaped. The light source can herein be displaced in a first direction and the orientation can be varied in a second direction. This is a favourable manner of obtaining in a short time the required image of the udder of an animal for milking.

Assuming that the udder is approached from a side of the animal for milking, it may be favourable to have the second direction correspond with the longitudinal direction of the animal for milking. The first direction thus corresponds with the direction in which the animal for milking is approached, so that the approaching movement can be used as the displacement of the light source in the first direction required for imaging. The displacement of the light source is thus combined in favourable manner with the approaching of the udder.

The method further preferably comprises of defining a distinction between a part of the udder located close to the robot arm and a part of the udder located further from the robot arm, which udder then has at least two teats, at least one of which belongs to each of the parts. A number of teat cups are connected one by one to the teats of the udder, which must begin at the teats in the part situated further away from the robot arm in order to prevent arranged teat cups coming to lie in the way of those teats to which a teat cup has yet to be connected. This is particularly the case in an embodiment wherein the robot arm and teat cups for connecting are all positioned on one side or behind the animal for milking.

The present invention will be further elucidated herein below on the basis of the description of the annexed drawings, wherein the same and similar parts and components are designated with the same reference numerals, and wherein:
fig. 1 shows schematically a possible embodiment of a device according to the present invention, wherein the method according to the invention is implemented;
fig. 2 shows a detail of the device of fig. 1 in operation;
fig. 3 shows a detail of the device according to fig. 1 and 2;
fig. 4 shows a schematic view of the manner in which the device according to the present invention displays an udder of an animal for milking in accordance with the method;
fig. 5 shows schematically a further step of the embodiment; and
fig. 6 shows a realization of the embodiment shown in fig. 5.

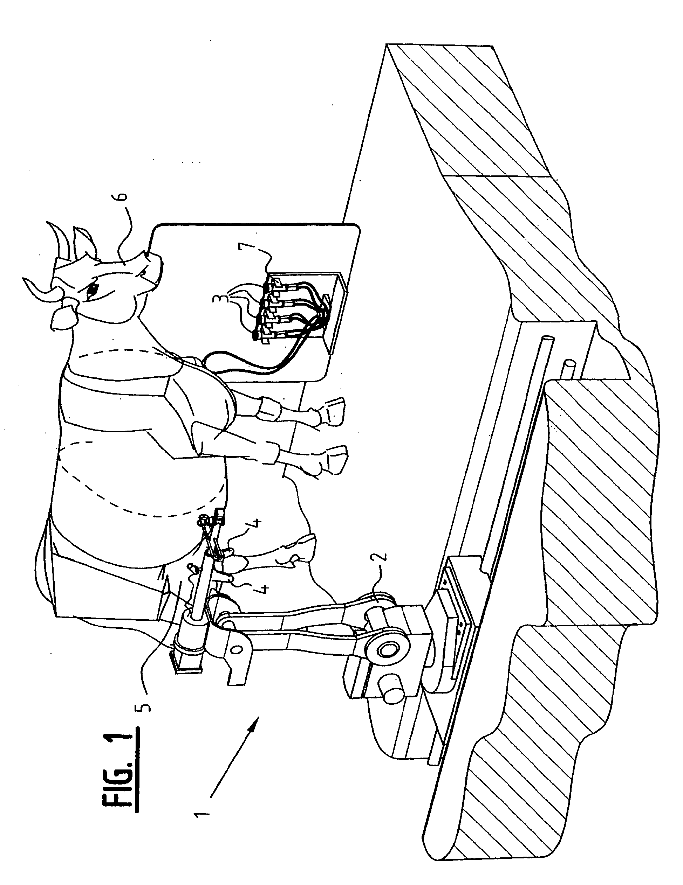

Fig. 1 shows a device 1 according to the present invention. This comprises a milking robot 2 which in the embodiment shown here is embodied as an industrial robot.

Milking robot 2 is used to engage and arrange teat cups 3 on teats 4 of an udder 5 of a cow for milking 6.

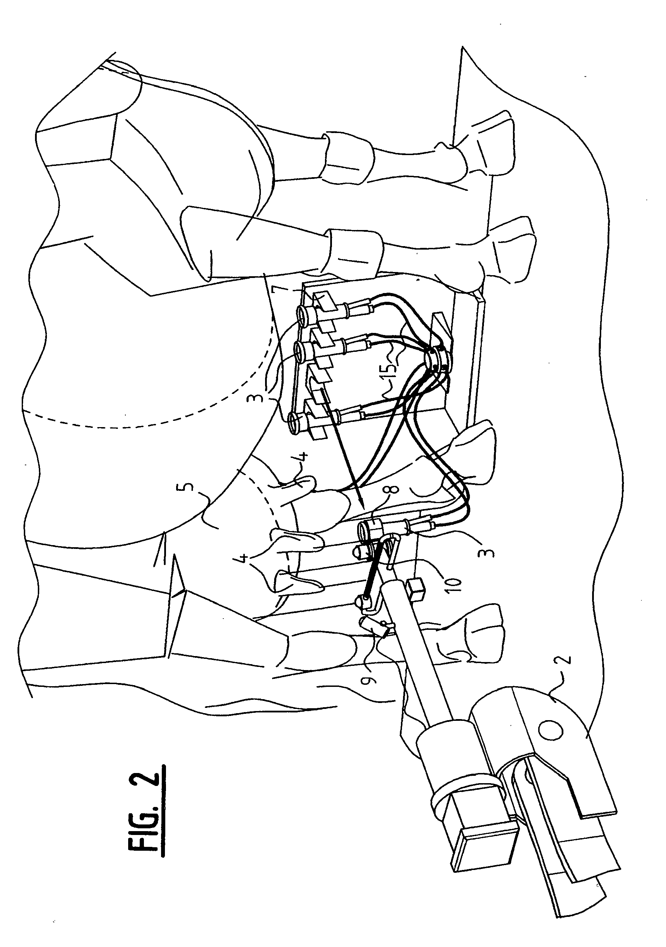

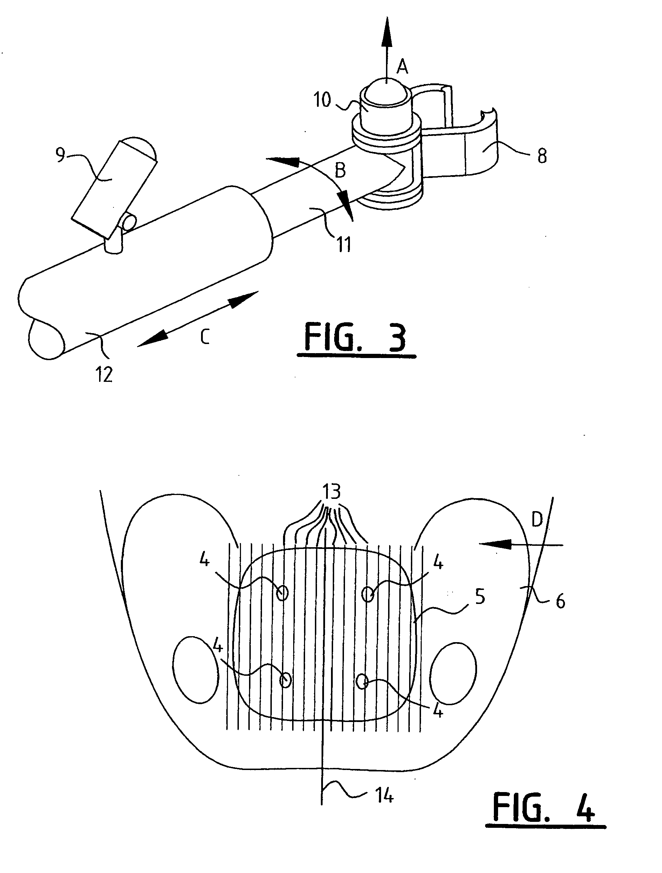

Teat cups 3 are hung in a holder 7 prior to use thereof where the teat cups 3 are arranged on teats 4 of udder 5. Milking robot 2 is adapted to remove teat cups 3 from holder 7 and arrange them. As shown more clearly in fig. 2 and 3, a gripper 8 with which teat cups 3 can be gripped is arranged for this purpose on the outer end of milking robot 2. Once gripped, the teat cups 3 are carried by milking robot 2 into the vicinity of teats 4 and teat cups 3 are each connected one by one to a teat 4.

It is noted that, with a robot arm which connects the teat cups one by one, it is also possible to arrange teat cups selectively. If a cow for milking for instance kicks off one of the teat cups, it must be reconnected, which is possible in the shown device according to the invention using the present method.

For this purpose the position and preferably also the orientation of teats 4 have to be determined, in order to actuate milking robot 2 on the basis of this determination when arranging the teat cups 3 on teats 4.

A camera 9 and a light source 10 are arranged for this purpose on the robot arms, as is for instance also shown in fig. 3.

Camera 9 and light source 10 are arranged on the milking robot 2 designed as an industrial robot and are situated in the vicinity of gripper 8. Light source 10 is for instance a laser generator, with which visible light is emitted in upward direction to udder 5 in the direction of arrow A in fig. 3 so as to form an image of udder 5. Light source 10 is herein situated on a part 11 of the milking robot rotatable in the direction of arrow B, while camera 9 is mounted on a part 12 which is fixed relative to part 11. The mutual distance between light source 10 and camera 9 therefore remains the same at all times. The assembly of rotatable part 11 and "fixed" part 12 is displaced in the direction of arrow C during imaging, while rotatable part 11 follows a reciprocal movement in the direction of arrow B.

As shown in fig. 4, the udder of the cow 6 for milking is approached from the direction of arrow D by the robot arm with a teat cup gripped thereby. A scanning grid as shown in fig. 4 is followed by displacement in the direction of arrow C in fig. 3 and rotation of the rotatable part 11 in the direction of arrow B in fig. 3. The pattern thus followed comprises lines 13 on which light from light source 10 is incident.

Light source 10 is driven pulsatingly. Light source 10 is under a control such that a light pulse is generated only when camera 9 is ready for a new recording, for instance when the shutter of camera 9 is open. Recordings without light pulse can also be made for comparison with images recorded with light pulses, as will be further described herein below.

Since the base of a triangle formed by camera 9, light source 10 and a point on which light from light source 10 is incident, is known, the distance to the point on which light from the light source is incident can be determined using triangulation, in any case relative to adjacent points along lines 13.

Making use of this detection of the point of incidence, a triangulation calculation is therefore performed by a control (not shown) of device 1. Here from a so-called contour map can be developed of the udder, in which the teats 4 are then clearly recognizable. The contour map is thus a three-dimensional representation of the udder, on the basis of which the teats can be recognized. The position of the teats can thus be determined as a result of recognition of teats 4.

As noted above, light source 10 is driven pulsatingly. It is hereby possible to increase the peak capacity of the light pulses without the danger of damage to eyes, in order to increase the resolution of illuminated points in the detection. The difference can herein be taken between a detection with the light source in operation and a detection with the light source out of operation. Effecting hereof achieves that the influence of points not illuminated with the light source affect the recognition of the points in the result of the differential calculation. The influence of external light sources, and also of ambient light such as daylight, are thus minimized as much as possible. Particularly in combination with the pulsating driving of the light source, to which the invention is of course not limited, it is possible to record an image with the camera when the light source 10 is out of operation and subsequently to record an image when light source 10 is in operation, so as to then be able to calculate the difference there between. The contrast, or resolution, is hereby increased. Due to the short time spans between successive detections subjected to the differential calculation, changes in the ambient light will have very little or no influence on the recognition of the point of the udder illuminated by the light source.

Using gripper 8 of milking robot 2, a teat cup 3 can then be arranged on a recognized teat, the position of which is thus determined. It is noted that, in addition to determining the position of teats 4, an axial line 14 running in the longitudinal direction of cow 6 is also defined. On the basis of this axial line 14 it is decided on which teats 4 a teat cup 3 first has to be connected. This is to prevent it not being possible, from the direction of approach indicated by arrow D from which the milking robot 2 approaches udder 5, to readily approach the rearmost teats 4 (to the left of axial line 14 in fig. 4) for arranging of a teat cup 3 thereon, when teat cups have already been arranged on the other teats 4 (to the right of axial line 14 in fig. 4). The teats 4 at the rear in respect of the direction of approach of arrow D (to the left of axial line 14) are thus connected first to the milking system. An appropriate sequence is also employed here in which the teat cups 3 are removed from holder 7. The hoses 15 connected to teat cups 3 are thus prevented from becoming entangled.

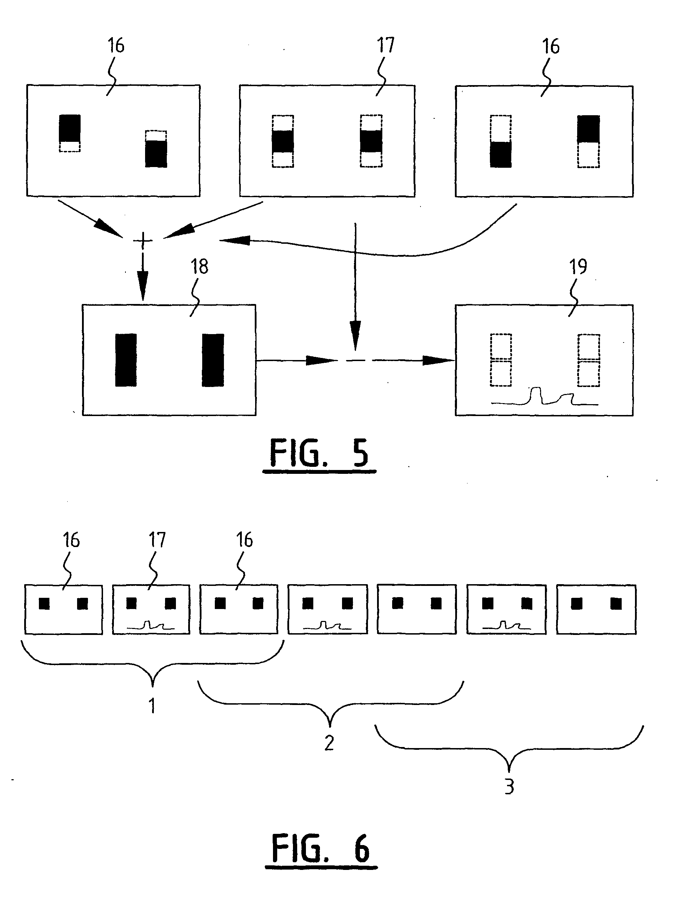

Fig. 5 shows a possible embodiment which is based on three images. For image processing two non-illuminated images are used together with one illuminated image. The non-illuminated images are designated with reference numerals 16, while the illuminated image is designated with reference numeral 17. These three images are then combined, resulting in image 18.

The difference between illuminated image 17 and combined image 18 is then taken, which results in the final image 19, on the basis of which the above stated contour map can be obtained.

In the original illuminated and non-illuminated images 16 and 17 movements of the animal for milking are indicated with arrows. It is clearly shown that the sensitivity of the imaging during movements of an animal for milking, for instance a cow, is reduced by using three images for this purpose. This is clearly shown from the resulting image 19. Reducing this sensitivity to movements of an animal is makes it possible to obtain a very reliable contour map.

During arranging of teat cups, the robot arm can then make use of the position of the teat cup relative to the udder represented by the contour map in order to orient the teat cup relative to the teat on which the teat cup must be arranged.

Fig. 6 shows the manner in which the method shown schematically in fig. 5 can be applied in a series of successively illuminated and non-illuminated images 17 and 16. A group of three images 16, 17 at a time is selected, wherein a illuminated image is recorded at a moment between obtaining two non-illuminated images.

It is noted that in such a method a relatively large number of calculations is required to calculate the contour maps and so on. Such a large number of calculations requires a proportional amount of time. In order to reduce this amount of time, the option is provided according to the present invention to perform calculations only for those points which are not dark in the image obtained with an activated light source. The reverse is also possible. The calculations are then performed here only for the dark points in the image which is recorded at a moment that the light source, has been in or out of operation. A considerable amount of information is thus used to obtain or calculate the contour map, in order to provide a reliable contour map, while the number of calculations required for the purpose is considerably reduced.

Although a configuration is shown in fig. 1 and 2 wherein the robot arm and the teat cups for arranging therewith on the teats are disposed opposite each other relative to cow 6, it is recommended to dispose the robot arm and the teat cups for connecting on the same side of the cow for milking, this in respect of the connecting sequence as just described above. In the configuration shown in fig. 1 and 2 the advantage of a choice of connecting sequence is not achieved because a teat cup, once connected, will be in the way of the robot arm each time it goes to collect a new teat cup for connecting, irrespective of the connecting sequence. The configurations shown in fig. 1 and 2 are nevertheless still a possible embodiment of the present invention.

It will be apparent that in fig. 4 a pattern is followed with the light coming from light source 10. In fig. 4 this is a line pattern running parallel to the axial line 14 to be deduced from the detections and position determinations. Other patterns are of course also possible for the purpose of, so to speak, scanning or mapping the udder 5. Lines 13 can thus run obliquely relative to axial line 14 or transversely thereof. This shows clearly that the present invention, as defined in the appended claims, is not limited to the specific embodiments as shown in the figures and described in the accompanying description.

A light source other than a laser can also be used, or a plurality of light sources can be employed and a light source can be switched on continuously without pulsation. Discrete points will preferably further be used along the lines to perform the triangulation calculation therefor. The lines in fig. 4 only serve to illustrate a possible pattern followed by the light coming from the light source. When the light from the light source has reached a desired point along one of lines 13, a detection with the recording means in the form of camera 9 is subjected to the triangulation calculation. The differences in the results of the triangulation calculation for adjacent separate discrete points, both along one of lines 13 and between lines 13, supply the information required for creating the contour map, which forms a three-dimensional representation of the udder. Teats can be recognized here from, the position of which can then be determined.

It is further possible for a milking robot to be employed to arrange teat cups from the rear side of the animal for milking, i.e. along the line 14 shown in fig. 4. It will be apparent that the axial line for the purpose of determining the connecting sequence will then be chosen transversely relative to the axial line shown in fig. 4. Further embodiments comprise for instance a gripper which can arrange more than one teat cup at a time. Although a cow with four teats is explicitly described above as animal for milking, the invention is also applicable in the milking of goats (two teats) and sheep or cows having only three teats, for which purpose it is favourable to connect the teat cups one by one.

In the explicit embodiment according to the present invention shown in the annexed drawing and described above, a combination of the camera and the light source is arranged in each case on the robot arm. The invention is however not limited hereto. The camera can for instance be disposed fixedly, for instance on a fence part of a milking parlour, wherein the laser or the light source is then mounted on the robot arm. The robot arm can herein realize at least a part of the pattern to be followed, for which purpose a separate, moveable component would otherwise be necessary. It is also possible that not the light source but the camera be placed on the robot arm, and both the light source and the camera can also be arranged separately or together at a position other than on the robot arm. The light source and the camera can herein be stationary relative to each other, although it is also possible for the light source and the camera to be disposed separately and displaceable relative to each other in any other conceivable manner.

## Claims

1. Method for determining the position of at least one teat (4) of an udder (5) of an animal (6) for milking, comprising of:
- illuminating the udder with a light source (10);
- obtaining an image of the udder (5); and
- determining from the image a position of a teat to be milked,
**characterized by**:
- illuminating points on the udder with at least one directed light source in a predetermined pattern for the purpose of scanning or mapping the udder, with the pattern to be followed with light coming from the light source;
- detecting points illuminated with the light source in the pattern with recording means (9);
- determining position data of illuminated points from a detection of the recording means (9) on the basis of triangulation;
- forming a three-dimensional representation of the udder from the position data and the pattern;
- recognizing the teat in the three-dimensional representation; and
- determining the location of the teat on the basis of the recognition and with the position data.

2. Method as claimed in claim 1, further comprising of driving the light source pulsatingly and detecting illuminated points when the light source is in operation.

3. Method as claimed in claim 1 or 2, further comprising of making at least two detections with the light source in and out of operation, and calculating the difference between the detections with the light source in and out of operation.

4. Method as claimed in any of the foregoing claims, further comprising of connecting a teat cup (3) to the teat with a robot arm at the determined location of the teat.

5. Method as claimed in any of the foregoing claims, comprising of disposing the light source and the recording means stationary relative to each other.

6. Method as claimed in claims 4 and 5, further comprising of arranging the light source and the recording means on the robot arm.

7. Method as claimed in any of the claims 1-4, further comprising of disposing the light source and the recording means separately and displaceably relative to each other.

8. Method as claimed in claims 4 and 7, further comprising of arranging one of the light source and the recording means on the robot arm.

9. Method as claimed in any of the foregoing claims, comprising of displacing at least the light source in a direction corresponding with the pattern.

10. Method as claimed in any of the foregoing claims, comprising of varying the orientation of the light source in a direction corresponding with the pattern.

11. Method as claimed in claims 9 and 10, wherein the pattern to be followed is zigzag-shaped, and comprising of displacing the light source in a first direction and varying the orientation of the light source in a second direction lying substantially transversely of the first direction.

12. Method as claimed in claim 11, wherein the second direction corresponds with the longitudinal direction of the animal for milking.

13. Method as claimed in claims 1 and 4, further comprising of:
- defining a distinction between a part of the udder located close to the robot arm and a part of the udder located further from the robot arm, wherein the udder has at least two teats, at least one of which belongs to each of the parts;
- distinguishing the teats of the udder in accordance herewith;
- connecting teat cups one by one to the teats on the parts of the udder situated further from the robot arm; and
- subsequently connecting teat cups one by one to the teats on the part of the udder situated close to the robot arm.

14. Device for determining the position of at least one teat (4) of an udder (5) of an animal (6) for milking as claimed in at least one of the foregoing claims, comprising:
- a light source (10) for illuminating the udder;
- recording means (9) for obtaining an image of the udder; and
- at least one computer for determining from the image a position of a teat to be milked,
**characterized in that**
- the light source is directed for illuminating points on the udder in a predetermined pattern to be followed for the purpose of scanning or mapping the udder, with the pattern to be followed with light coming from the light source:
- the recording means are arranged for detecting points illuminated with the light source when the pattern is followed; and
- the computer unit is adapted for:
- determining position data of illuminated points from a detection of the recording means on the basis of triangulation;
- forming a three-dimensional representation of the udder from the position data and the pattern;
- recognizing the teat in the three-dimensional representation; and
- determining the location of the teat on the basis of the recognition and with the position data.

15. Device as claimed in claim 14, further comprising a robot arm for arranging teat cups on the teat and a control of the robot arm for connecting a teat cup to the teat at the location of the teat determined by the computer unit.

16. Device as claimed in claim 15, wherein the light source and the recording means are arranged on the robot arm and the control is adapted to actuate the robot arm in a movement corresponding to the pattern.

## Patentansprüche

1. Verfahren zur Bestimmung der Position von mindestens einer Zitze (4) eines Euters (5) eines Tieres (6) zum Melken, mit den Schritten:
- Beleuchten des Euters mit einer Lichtquelle (10);
- Erhalten einer Abbildung des Euters (5); sowie
- Bestimmen einer Position einer zu melkenden Zitze aus der Abbildung,
**gekennzeichnet durch** die Schritte:
- Beleuchten von Punkten auf dem Euter mit mindestens einer gerichteten Lichtquelle in einem vorgegebenen Muster zum Zwecke des Scannens oder Aufzeichnens des Euters, wobei das Muster mit aus der Lichtquelle kommendem Licht nachverfolgt wird;
- Erfassen von mit der Lichtquelle beleuchteten Punkten in dem Muster mit Aufzeichnungseinrichtungen (9);
- Bestimmen von Positionsdaten von beleuchteten Punkten aus einer Erfassung der Aufzeichnungseinrichtungen (9) auf der Basis von Dreiecksvermessung;
- Ausbilden einer dreidimensionalen Darstellung des Euters aus den Positionsdaten und dem Muster;
- Erkennen der Zitze in der dreidimensionalen Darstellung; sowie
- Bestimmen der Lage der Zitze auf der Basis der Erkennung und mit den Positionsdaten.

2. Verfahren nach Anspruch 1, weiterhin mit pulsierendem Betreiben der Lichtquelle und Erfassen von beleuchteten Punkten, wenn die Lichtquelle in Betrieb ist.

3. Verfahren nach Anspruch 1 oder 2, weiterhin mit der Durchführung von mindestens zwei Erfassungen, wobei die Lichtquelle in und außer Betrieb ist, und Berechnen des Unterschiedes zwischen den Erfassungen jeweils mit der Lichtquelle in und außer Betrieb.

4. Verfahren nach einem der vorhergehenden Ansprüche, weiterhin mit dem Anschließen eines Zitzenbechers (3) an die Zitze mit einem Roboterarm in der vorgegebenen Lage der Zitze.

5. Verfahren nach einem der vorhergehenden Ansprüche, mit dem Anbringen der Lichtquelle und der Aufnahmeeinrichtungen stationär bezüglich zueinander.

6. Verfahren nach Anspruch 4 und 5, weiterhin mit dem Anordnen der Lichtquelle und der Aufnahmeeinrichtung an dem Roboterarm.

7. Verfahren nach einem der Ansprüche 1 bis 4, weiterhin mit dem Anbringen der Lichtquelle und der Aufnahmeeinrichtungen getrennt und verschiebbar bezüglich zueinander.

8. Verfahren nach Anspruch 4 und 7, weiterhin mit dem Anordnen von entweder der Lichtquelle oder der Aufnahmeeinrichtung an dem Roboterarm.

9. Verfahren nach einem der vorhergehenden Ansprüche, mit dem Verschieben von zumindest der Lichtquelle in eine dem Muster entsprechende Richtung.

10. Verfahren nach einem der vorhergehenden Ansprüche, mit dem Verändern der Ausrichtung der Lichtquelle in eine dem Muster entsprechende Richtung.

11. Verfahren nach Anspruch 9 und 10, wobei das nachzuverfolgende Muster zickzackförmig ist, und mit Verschieben der Lichtquelle in eine erste Richtung und Verändern der Ausrichtung der Lichtquelle in eine zweite Richtung, die im Wesentlichen quer zu der ersten Richtung verläuft.

12. Verfahren nach Anspruch 11, wobei die zweite Richtung der Längsrichtung des zu melkenden Tieres entspricht.

13. Verfahren nach Anspruch 1 und 4, weiterhin mit den Schritten:
- Festlegen einer Unterscheidung zwischen einem Teil des Euters, der sich nahe an dem Roboterarm befindet, und einem Teil des Euters, der sich weiter weg von dem Roboterarm befindet, wobei das Euter mindestens zwei Zitzen aufweist, wovon mindestens eine zu jedem der Teile gehört;
- dementsprechendes Unterscheiden der Zitzen des Euters;
- Anschließen von Zitzenbechern nacheinander an die Zitzen an den Teilen des Euters, die weiter weg von dem Roboterarm liegen; und
- nachfolgend Anschließen von Zitzenbechern nacheinander an die Zitzen an dem Teil des Euters, der sich nahe an dem Roboterarm befindet.

14. Vorrichtung zum Bestimmen der Position von mindestens einer Zitze (4) eines Euters (5) eines Tieres (6) zum Melken nach mindestens einem der vorstehenden Ansprüche, mit:
- einer Lichtquelle (10) zum Beleuchten des Euters;
- Aufnahmeeinrichtungen (9) zum Erhalten einer Abbildung des Euters; sowie
- mindestens einem Rechner zum Bestimmen einer Position einer zu melkenden Zitze aus der Abbildung,
**dadurch gekennzeichnet, dass**
- die Lichtquelle zum Beleuchten von Punkten auf dem Euter in einem vorgegebenen, nachzuverfolgenden Muster zum Zwecke des Scannens oder Aufzeichnens des Euters gerichtet wird, wobei das Muster mit von der Lichtquelle kommendem Licht nachverfolgt wird;
- die Aufnahmeeinrichtungen zum Erfassen von Punkten angeordnet sind, die mit der Lichtquelle beleuchtet werden, wenn das Muster nachverfolgt wird; und
- die Rechnereinheit geeignet ist zur:
- Bestimmung von Positionsdaten von beleuchteten Punkten aus einer Erfassung der Aufnahmeeinrichtungen auf der Basis von Dreiecksvermessung;
- Bildung einer dreidimensionalen Darstellung des Euters aus den Positionsdaten und dem Muster;
- Erkennung der Zitze in der dreidimensionalen Darstellung; sowie
- Bestimmung der Lage der Zitze auf der Basis der Erkennung und mit den Positionsdaten.

15. Vorrichtung nach Anspruch 14, weiterhin mit einem Roboterarm zum Anordnen von Zitzenbechern an der Zitze sowie einer Steuerung des Roboterarms zum Anschließen eines Zitzenbechers an die Zitze an der von der Rechnereinheit bestimmten Stelle der Zitze.

16. Vorrichtung nach Anspruch 15, wobei die Lichtquelle und die Aufnahmeeinrichtungen an dem Roboterarm angeordnet sind und die Steuerung geeignet ist, den Roboterarm in einer dem Muster entsprechenden Bewegung zu betätigen.

## Revendications

1. Procédé destiné à déterminer la position d'un trayon (4) au moins d'une mamelle (5) d'un animal (6) à traire, comprenant les étapes consistant à :
- éclairer la mamelle avec une source de lumière (10) ;
- obtenir une image de la mamelle (5) ; et
- déterminer, à partir de l'image, la position d'un trayon à traire,
**caractérisé par** les étapes consistant à :
- éclairer des points situés sur la mamelle avec au moins une source de lumière dirigée en un motif prédéterminé de façon à balayer ou à cartographier la mamelle, le motif étant à suivre avec la lumière qui provient de la source de lumière ;
- détecter avec des moyens d'enregistrement (9) les points éclairés par la source de lumière selon le motif ;
- déterminer les données de position des points éclairés à partir de la détection des moyens d'enregistrement (9) sur la base d'une triangulation ;
- former une représentation tridimensionnelle de la mamelle à partir des données de position et du motif ;
- reconnaître le trayon dans la représentation tridimensionnelle ; et
- déterminer l'emplacement du trayon sur la base de la reconnaissance et avec les données de position.

2. Procédé selon la revendication 1, comprenant en outre les étapes consistant à commander la source de lumière de manière pulsée, et à détecter les points éclairés lorsque la source de lumière est en service.

3. Procédé selon la revendication 1 ou la revendication 2, comprenant en outre les étapes consistant à exécuter deux détections au moins lorsque la source de lumière est en service et hors service, et à calculer la différence entre les détections lorsque la source de lumière est en service et hors service.

4. Procédé selon l'une quelconque des revendications précédentes, comprenant en outre une étape consistant à connecter un gobelet trayeur (3) au trayon avec un bras robotisé au niveau de l'emplacement déterminé du trayon.

5. Procédé selon l'une quelconque des revendications précédentes, comprenant une étape consistant à disposer la source de lumière et les moyens d'enregistrement de façon fixe l'une par rapport aux autres.

6. Procédé selon les revendications 4 et 5, comprenant en outre une étape consistant à agencer la source de lumière et les moyens d'enregistrement sur le bras robotisé.

7. Procédé selon l'une quelconque des revendications 1 à 4, comprenant en outre une étape consistant à disposer la source de lumière et les moyens d'enregistrement de manière à pouvoir les séparer et les déplacer l'une par rapport aux autres.

8. Procédé selon les revendications 4 et 7, comprenant en outre une étape consistant à agencer la source de lumière ou les moyens d'enregistrement sur le bras robotisé.

9. Procédé selon l'une quelconque des revendications précédentes, comprenant une étape consistant à déplacer la source de lumière au moins dans une direction qui correspond au motif.

10. Procédé selon l'une quelconque des revendications précédentes, comprenant une étape consistant à faire varier l'orientation de la source de lumière dans une direction qui correspond au motif.

11. Procédé selon les revendications 9 et 10, dans lequel le motif à suivre présente une forme en zigzag, et comprenant les étapes consistant à déplacer la source de lumière dans une première direction, et à faire varier l'orientation de la source de lumière dans une seconde direction qui se situe sensiblement de manière transversale par rapport à la première direction.

12. Procédé selon la revendication 11, dans lequel la seconde direction correspond à la direction longitudinale de l'animal à traire.

13. Procédé selon les revendications 1 et 4, comprenant en outre les étapes consistant à :
- définir une distinction entre une partie de la mamelle qui se situe à proximité du bras robotisé et une partie de la mamelle qui se situe plus loin du bras robotisé, dans lequel la mamelle présente au moins deux trayons, l'un au moins appartenant à chacune des parties ;
- distinguer les trayons de la mamelle en conséquence ;
- connecter les gobelets trayeurs un par un aux trayons sur les parties de la mamelle qui se situent plus loin du bras robotisé ; et
- connecter par la suite les gobelets trayeurs un par un aux trayons sur la partie de la mamelle qui se situe près du bras robotisé.

14. Dispositif destiné à déterminer la position d'un trayon (4) au moins d'une mamelle (5) d'un animal (6) pour la traite selon une quelconque des revendications précédentes, comprenant :
- une source de lumière (10) destinée à éclairer la mamelle ;
- des moyens d'enregistrement (9) destinés à obtenir une image de la mamelle ; et
- au moins un ordinateur destiné à déterminer à partir de l'image la position d'un trayon à traire ;
**caractérisé en ce que** :
- la source de lumière est dirigée de façon à éclairer des points situés sur la mamelle en un motif prédéterminé à suivre de façon à balayer ou à cartographier la mamelle, le motif étant à suivre avec la lumière qui provient de la source de lumière :
- les moyens d'enregistrement sont agencés de façon à détecter les points éclairés par la source de lumière lorsque le motif est suivi ; et
- l'unité informatique est adaptée de façon à :
- déterminer les données de position des points éclairés à partir de la détection des moyens d'enregistrement sur la base d'une triangulation ;
- former une représentation tridimensionnelle de la mamelle à partir des données de position et du motif ;
- reconnaître le trayon dans la représentation tridimensionnelle ; et
- déterminer l'emplacement du trayon sur la base de la reconnaissance et avec les données de position.

15. Dispositif selon la revendication 14, comprenant en outre un bras robotisé destiné à disposer les gobelets trayeurs sur le trayon, et une commande du bras robotisé destinée à connecter un gobelet trayeur au trayon au niveau de l'emplacement du trayon déterminé par l'unité informatique.

16. Dispositif selon la revendication 15, dans lequel la source de lumière et les moyens d'enregistrement sont agencés sur le bras robotisé, et la commande est adaptée de façon à actionner le bras robotisé selon un déplacement qui correspond au motif.
